Europäisches Patentamt

European Patent Office

Office européen des brevets

(11) Veröffentlichungsnummer: **0 259 783 B1**

## EUROPÄISCHE PATENTSCHRIFT

(45) Veröffentlichungstag der Patentschrift: **26.01.94**

(21) Anmeldenummer: **87112866.6**

(22) Anmeldetag: **03.09.87**

(51) Int. Cl.5: **C07C 69/00**, C08K 5/10, C08L 27/06

Die Akte enthält technische Angaben, die nach dem Eingang der Anmeldung eingereicht wurden und die nicht in dieser Patentschrift enthalten sind.

(54) **Gleitmittel für thermoplastische Kunststoffe.**

(30) Priorität: **10.09.86 DE 3630783**

(43) Veröffentlichungstag der Anmeldung:
**16.03.88 Patentblatt 88/11**

(45) Bekanntmachung des Hinweises auf die Patenterteilung:
**26.01.94 Patentblatt 94/04**

(84) Benannte Vertragsstaaten:
**BE DE FR IT NL**

(56) Entgegenhaltungen:
EP-A- 0 259 768
DE-A- 1 907 768
DE-A- 1 907 768
GB-A- 2 008 128

CHEMICAL ABSTRACTS, 105(26) 1986, Seite 69, 228295x, & JP-61 81 444

PVC Handbuch, 1986, Hanser Verlag, S.583

(73) Patentinhaber: **NEYNABER CHEMIE GmbH**
**Am Wedenberg**
**Postfach 11 20**
**D-27608 Loxstedt(DE)**

(72) Erfinder: **Worschech, Kurt, Dr.**
**Alte Strasse 4**
**D-2854 Loxstedt(DE)**
Erfinder: **Fleischer, Erwin**
**Dwarsweg 1**
**D-2858 Schiffdorf(DE)**
Erfinder: **Wedl, Peter**
**Löningstrasse 13**
**Bremerhaven-M.(DE)**
Erfinder: **Löffelholz, Frido**
**Vieländer Weg 226 F**
**D-2850 Bremerhaven(DE)**
Erfinder: **Brand, Udo Ernst**
**Allerstrasse 18**
**D-2850 Bremerhaven-Wulfsdorf(DE)**

EP 0 259 783 B1

**Beschreibung**

Bei der Herstellung von weichmacherfreien Folien aus Polyvinylchlorid im Kalanderverfahren werden Gleitmittel benötigt, die eine gute Trennwirkung besitzen und ein sicheres Abheben der heißen Folien von der Kalanderwalze gewährleisten. Die Trennwirkung muß sowohl bei normalen, nichtmodifizierten Polyvinylchloridformmassen als auch bei schlagzäh eingestellten, Modifier enthaltenden Polyvinylchloridformmassen gegeben sein. Die geforderte trennende Wirkung setzt eine gewisse Unverträglichkeit des Gleitmittels gegenüber dem Polyvinylchlorid voraus, damit sich das Gleitmittel an der Folienoberfläche anreichert. Gleichzeitig soll aber jede Eintrübung der Folien vermieden werden. Auch dann, wenn relativ hohe Gleitmittelmengen eingesetzt werden, wie dies bei der Herstellung von sehr dünnen Folien der Fall ist, sollten sich glasklare Artikel erzeugen lassen. In vielen Fällen ist es nicht möglich beide Forderungen optimal zu erfüllen. Häufig müssen, mit Rücksicht auf die in jedem Fall erforderliche Trennwirkung, Kompromisse zu Lasten der Transparenz eingegangen werden.

Bekannte Gleitmittel für die Herstellung von weichmacherfreien PVC-Folien sind einerseits Montanwachse und andererseits praktisch neutrale Mischester aus aliphatischen, cycloaliphatischen oder aromatischen Dicarbonsäuren mit 2 bis 22 Kohlenstoffatomen, aliphatischen Polyolen mit 2 bis 6 Hydroxylgruppen und aliphatischen Monocarbonsäuren mit 12 bis 30 Kohlenstoffatomen mit Hydroxyl- bzw. Säurezahlen von 0 bis 6 (DE-PS 19 07 768) sowie praktisch neutralen Mischestern aus aliphatischen Diolen, aliphatischen, cycloaliphatischen oder aromatischen Polycarbonsäuren mit mit 2 bis 6 Carboxylgruppen und aliphatischen monofunktionellen Alkoholen mit 12 bis 30 Kohlenstoffatomen (DE-PS 23 06 744). Montanwachse haben dabei den Nachteil, daß sie in nichtmodifiziertem Polyvinylchlorid bereits bei niedriger Dosierung starke Trübungen verursachen. In modifiziertem Polyvinylchlorid sind Montanwachse zu gut löslich, so daß ihre Trennwirkung zu wünschen übrig läßt. Den genannten Mischestern haftet der Nachteil an, daß sie in modifiziertem Polyvinylchlorid bereits bei niederer Dosierung relativ starke Trübungen verursachen.

Der vorliegenden Erfindung lag die Aufgabe zugrunde, neue Gleitmittel für die Herstellung von weichmacherfreien PVC-Folien zu schaffen, die frei von den genannten Nachteilen sind. Es sollten insbesondere Gleitmittel aufgefunden werden, die bereits bei niedrigen Dosierungen die geforderte Trennwirkung entfalten, wobei die Verträglichkeit gegenüber dem Polyvinylchlorid so eingestellt sein sollte, daß Trübungen sowohl in nichtmodifizierten als auch in schlagzäh eingestellten PVC-Massen mit Sicherheit vermieden werden können.

Die Lösung dieser Aufgabe beruht auf der Erkenntnis, daß hydroxylgruppenhaltige Mischester aus aliphatischen, cycloaliphatischen und/oder aromatischen Dicarbonsäuren, aliphatischen Polyolen und aliphatischen Monocarbonsäuren, die pro Molekül Mischester im Molekül mindestens eine freie Hydroxylgruppe besitzen, die gestellten Anforderungen erfüllen.

Gegenstand der Erfindung sind für die Verwendung als Gleitmittel für thermoplastische Kunststoffe geeignete Mischester aus

a) aliphatischen, cycloaliphatischen und/oder aromatischen Dicarbonsäuren mit 2 bis 22 Kohlenstoffatomen, die gegebenenfalls mit 1 bis 2 Hydroxylgruppen substituiert sind,

b) aliphatischen Polyolen mit 3 bis 6 Hydroxylgruppen und

c) aliphatischen Monocarbonsäuren mit 2 bis 32 Kohlenstoffatomen, die gegebenenfalls mit 1 bis 2 Hydroxylgruppen substituiert sind,

in denen das Molverhältnis der Komponenten a) und b) etwa

$$n - 1 : n$$

beträgt, wobei n eine ganze Zahl von 6 bis 15 ist, und die Art und die Molzahl der Komponente c) so gewählt ist, daß pro Molekül Mischester im Mittel mindestens eine freie Hydroxylgruppe vorhanden ist.

Als besonders geeignet haben sich Mischester erwiesen, in denen das Molverhältnis von freien Hydroxylgruppen zu vorhandenen Dicarbonsäureresten im Bereich von 1 : 1 bis 1 : 7 liegt.

Die erfindungsgemäßen Mischester können nach bekannten Methoden der organischen Synthese erhalten werden. Die im Mischestermolekül vorhandenen freien Hydroxylgruppen können aus dem für die Synthese eingesetzten Polyol, aus einer oder mehreren bei der Synthese mitverwendeten Hydroxydicarbonsäuren und/oder aus einer oder mehreren bei der Synthese mitverwendeten Hydroxymonocarbonsäuren herstammen. Als Ausgangsmaterialien für die Herstellung der erfindungsgemäßen Gleitmittel kommen beispielsweise die nachstehend aufgeführten Verbindungen in Frage:

Als aliphatische, cycloaliphatische oder aromatische Dicarbonsäuren sind z.B. folgende Verbindungen geeignet: Oxal-, Malon-, Bernstein-, Glutar-, Adipin-, Pimelin-, Kork-, Azelain-, Sebazin-, Nonandicarbon-, Decandicarbon-, Undecandicarbon-, Dodecandicarbon-, Eikosandicarbon-, Malein-, Fumar-, Citracon-, Mesacon-, Itacon-, Cyclopropan-, Cyclobutan-, Cyclopentadiencarbonsäure, Camphersäure, Hexahydrophtalsäure, Phthalsäure, Terephthalsäure, Isophthalsäure, Naphthalsäure und Diphenyl-o,o′-dicarbonsäure. Als Dicarbonsäuren, die mit 1 bis 2 Hydroxylgruppen substituiert sind, kommen insbesondere Tartronsäure, Hydroxybersteinsäure und Weinsäure in Betracht.

Als Polyolkomponente für die Herstellung der erfindungsgemäßen Mischester seien z.B. folgende Verbindungen genannt: Glycerin, Trimethylolpropan, Erythrit, Pentaerythrit, Diglycerin, Ditrimethylolpropan, Dipentaerythrit, Xylit, Mannit und Sorbit.

Als Monocarbonsäurekomponente für die Herstellung der erfindungsgemäßen Mischester eignen sich beispielsweise folgende Verbindungen: Laurin-, Myristin-, Palmitin-, Margarin-, Stearin-, Arachin-, Behen-, Lignocerin-, Cerotin-, Montan-, Öl-, Elaidin-, Arachidon-, Eruka-, Linol- und Linolensäure, ferner Gemische dieser Säuren, insbesondere solche, wie sie aus natürlichen Fetten und Ölen gewonnen werden können. Als Monocarbonsäuren, die mit 1 bis 2 Hydroxylgruppen substituiert sind, kommen z.B. Milchsäure, Dimethylolpropionsäure (2,2-Dihydroxymethylpropionsäure), 10-Hydroxystearinsäure, 12-Hydroxystearinsäure, 9,10-Dihydroxystearinsäure und Ricinolsäure in Betracht.

Die Herstellung der erfindungsgemäßen Mischester erfolgt nach an sich bekannten Veresterungsverfahren, gegebenenfalls unter Verwendung von geeigneten Veresterungskatalysatoren wie z. B. Zinnschliff. Das Herstellungsverfahren umfaßt in der Regel mehrere Schritte, deren Reihenfolge sich nach der für den jeweiligen Mischester vorgesehenen Stöchiometrie richtet, wobei besonders zu beachten ist, daß Hydroxylgruppen, die über Hydroxydicarbonsäuren oder Hydroxymonocarbonsäuren in das Molekül eingeführt werden, unverestert bleiben.

Nur in den Fällen, in denen die freien Hydroxylgruppen des Mischestermoleküls ausschließlich aus dem eingesetzten Polyol stammen, ist es praktikabel, die Synthese durch gleichzeitiges Verestern des Polyols mit der Dicarbonsäure und der Monocarbonsäure in einem Einstufenverfahren durchzuführen. Es wird aber auch hier vorgezogen, die Mischester in einem Zweistufenverfahren zu synthetisieren. Dabei kann man beispielsweise so vorgehen, daß man zunächst Dicarbonsäure und Polyol in den vorgesehenen Gesamtmengen miteinander zur Reaktion bringt, bis die Säurezahl praktisch Null beträgt, und anschließend die Veresterung mit der vorgesehenen Menge Monocarbonsäure vornimmt, wiederum bis zum Abfallen der Säurezahl auf Null. Das Herstellungsverfahren kann in diesem Fall auch dahingehend abgewandelt werden, daß man in der ersten Stufe Polyol und Monocarbonsäure, jeweils in den vorgesehenen Gesamtmengen, soweit miteinander verestert, daß die Säurezahl des Reaktionsgemisches praktisch Null ist. In der zweiten Verfahrensstufe wird dann das erhaltene Zwischenprodukt mit der berechneten Menge Dicarbonsäure verestert, bis die Säurezahl auf etwa Null abgefallen ist.

Für die Herstellung von Mischestern, bei denen die freien Hydroxylgruppen ganz oder teilweise aus einer Hydroxydicarbonsäure stammen, kann die zuletzt beschriebene Variante dahingehend abgewandelt werden, daß man in der zweiten Stufe anstelle der Dicarbonsäure eine Hydroxydicarbonsäure oder ein Dicarbonsäure-/Hydroxydicarbonsäuregemisch einsetzt. Vorzugsweise geht man im zuletzt genannten Fall so vor, daß man das aus Polyol und Monocarbonsäure gewonnene Zwischenprodukt zuerst mit der Dicarbonsäure und danach mit der Hydroxydicarbonsäure umsetzt.

Mit Mischestern, bei denen die freien Hydroxylgruppen ganz oder teilweise aus Hydroxymonocarbonsäuren stammen, können gegebenenfalls besondere Effekte erzielt werden. Solche Mischester werden vorzugsweise dadurch hergestellt, daß man die Hydroxycarbonsäuren in der letzten Synthesestufe mit einem aus Polyol, Dicarbonsäure und Monocarbonsäure synthetisierten Zwischenprodukt verestert.

Gegenstand der Erfindung ist ferner die Verwendung von Mischestern aus

a) aliphatischen, cycloaliphatischen und/oder aromatischen Dicarbonsäuren mit 1 bis 22 Kohlenstoffatomen, die gegebenenfalls mit 1 bis 2 Hydroxylgruppen substituiert sind,

b) aliphatischen Polyolen mit 3 bis 6 Hydroxylgruppen und

c) aliphatischen Monocarbonsäuren mit 2 bis 32 Kohlenstoffatomen, die gegebenenfalls mit 1 bis 2 Hydroxylgruppen substituiert sind,

in denen das Molverhältnis der Komponenten a) und b) etwa

$n - 1 : n$

beträgt, wobei n eine ganze Zahl von 6 bis 15 ist und die Art und die Molzahl der Komponente c) so gewählt ist, daß pro Molekül Mischester im Mittel mindestens eine freie Hydroxylgruppe vorhanden ist, als Gleitmittel für die formgebende Verarbeitung von thermoplastischen Kunststoffen, insbesondere von Polyvinylchlorid oder überwiegend Vinylchlorid enthaltenden Mischpolymerisaten.

Bei der praktischen Verwendung werden die erfindungsgemäß als Gleitmittel zu verwendenden Mischester den zu verarbeitenden Formmassen vor der Formgebung zugesetzt. Die zugesetzte Menge richtet sich nach dem zu verarbeitenden Polymerisat und bewegt sich in den Grenzen von 0,1 bis 2, vorzugsweise 0,2 bis 1 Gewichtsteilen auf 100 Gewichtsteile Polymerisat. Nach homogener Verteilung der Gleitmittels in den Formmassen kann die Verformung erfolgen.

Die Gleitmittelwirkung der erfindungegemäßen hydroxylgruppenhaltigen Mischester kann bei der formgebenden Verarbeitung von thermoplastischen Polymerisaten ausgenutzt werden, deren wesentlicher Bestandteil Vinylchlorid ist. In erster Linie kommen hier Homopolymere des Vinylchlorids mit K-Werten im Bereich von 57 bis 65, vorzugweise von 60 bis 62 in Betracht, die durch Suspensions- oder Massepolymerisation hergestellt wurden. Auch Gemische von Suspensions-PVC oder Masse-PVC mit Emulsions-PVC können hier von Interesse sein. In Betracht kommen weiterhin Mischpolymerisate mit mindestens 75 Gew.-% Vinylchlorid und weiteren polymerisierbaren Monomeren wie Vinylestern, insbesondere Vinylacetat, Methacrylsäureestern, insbesondere Methyl- und Butylmethacrylat, Fumarsäureestern, gegebenenfalls freier Fumarsäure oder Crotonsäure in untergeordneter Menge, sowie Vinylidenchlorid.

Gegenstand der Erfindung sind schließlich auch Formmassen auf Basis von thermoplastischen Kunststoffen, insbesondere von Polyvinylchlorid oder überwiegend Vinylchlorid enthaltenden Mischpolymerisaten mit einem Gehalt an Mischestern aus

a) aliphatischen, cycloaliphatischen und/oder aromatischen Dicarbonsäuren mit 2 bis 22 Kohlenstoffatomen, die gegebenenfalls mit 1 bis 2 Hydroxylgruppen substituiert sind,
b) aliphatischen Polyolen mit 3 bis 6 Hydroxylgruppen und
c) aliphatischen Monocarbonsäuren mit 2 bis 32 Kohlenstoffatomen, die gegebenenfalls mit 1 bis 2 Hydroxylgruppen substituiert sind,

in denen das Verhältnis der Komponenten a) und b) etwa

$$n - 1 : n$$

beträgt, wobei n eine ganze Zahl von 6 bis 15 ist und die Art und die Molzahl der Komponente c) so gewählt ist, daß pro Molekül Mischester im Mittel mindestens eine freie Hydroxylgruppe vorhanden ist, als Gleitmittel, wobei die Mischester in Mengen von 0,1 bis 2 Gewichtsteilen auf 100 Gewichtsteile Polymerisat vorhanden sind.

Es konnte gezeigt werden, daß die neuen Gleitmittel sowohl in nichtmodifizierten als auch in schlagzäh eingestellten Polyvinylchlorid-Formmasseneine hohe Trennwirkung entfalten, so daß schon geringe Zusatzmengen ausreichen, um den geforderten Trenneffekt zu bewirken. Dabei sind die neuen Produkte mit den PVC-Mischungen so gut verträglich, daß im Rahmen der für eine einwandfreie Trennung notwendigen Zusatzmengen auch bei schlagzäh eingestellten Formmassen unerwünschte Trübungen in jedem Fall vermieden werden können.

## Beispiele

### Beispiel A: Pentaerythrit-succinat-stearat 7:6:14)

71,4 g (0,525 Mol Pentaerythrit und 283,5 g (1,05 Mol) technische Stearinsäure wurden in Gegenwart von 0,2 g Zinnschliff unter Rühren und Anlegen eines leichten Vakuums im Verlauf von 30 Minuten auf 210°C erhitzt. Nach Verminderung des Drucks auf 12 mbar wurde das Gemisch 3 Stunden lang auf 200 bis 210°C gehalten. Danach wurde das Gemisch auf 100°C abgekühlt, bevor 53,1 g (0,45 Mol) Bernsteinsäure und 0,2 g Zinnschliff zugegeben wurden. Anschließend wurde das Gemisch 4 Stunden lang auf 200 bis 210°C erhitzt, wobei der Druck im Verlauf der beiden ersten Stunden langsam auf 19 mbar vermindert und anschließend bei diesem Wert gehalten wurde. Die Reaktionsmischung wurde mit Bleicherde versetzt und bei 90°C der Druckfiltration unterworfen. Nach dem Abkühlen lag das Pentaerythrit-succinat-stearat (7:6:14) (Substanz A; 304 g) als gelbliche, schwach spröde, wachsartige Masse vor (Tropfpunkt 55,1°C; Säurezahl 2,3; Verseifungszahl 281,5; Hydroxylzahl 24,9).

### Beispiel B: Pentaerythrit-adipat-stearat (7:6:14)

Analog Beispiel A wurden 71,4 g (0,525 Mol) Pentaerythrit und 283,5 g (1,05 Mol) Stearinsäure in Gegenwart von 0,2 g Zinnschliff im Verlauf von 3 Stunden bei 200 bis 210°C miteinander umgesetzt. Danach wurden dem Reaktionsgemisch 65,7 g (0,45 Mol) Adipinsäure und 0,2 g Zinnschliff zugegeben, bevor es 5 1/2 Stunden lang auf 200 bis 210°C erhitzt wurde. Dabei wurde der Druck im Verlauf der ersten 90 Minuten langsam auf 24 mbar vermindert und für den Rest der Zeit bei diesem Wert gehalten. Nach Druckfiltration und Abkühlen lag das Pentaerythrit-adipat-stearat (7:6:14) (Substanz B; 372 g) als gelbliche, spröde, wachsartige Masse vor (Tropfpunkt 53,2 °C; Säurezahl 2,1; Verseifungszahl 286,4; Hydroxylzahl 22).

Beispiel C: Pentaerythrit-adipat-behenat (7:6:12)

Analog Beispiel A wurden 78,2 g (0,575 Mol) Pentaerythrit und 335,3 g (0,986 Mol) Behensäure in Gegenwart von 0,25 g Zinnschliff im Verlauf von 2 Stunden bei 200 bis 210 °C miteinander umgesetzt. Danach wurden dem Reaktionsgemisch 72,0 g (0,49 Mol) Adipinsäure und 0,25 g Zinnschliff zugegeben, bevor es 2 Stunden lang auf 210 °C unter zunehmendem Vakuum (Enddruck 10 bis 20 mbar) weitererhitzt wurde. Nach Druckfiltration und Abkühlen lag das Pentaerythrit-adipat-behenat (7:6:12) (Substanz C; 345 g) als schwach gelbliche, etwas spröde, wachsartige Masse vor (Tropfpunkt 70,0 °C; Säurezahl 0,92; Verseifungszahl 230,1; Hydroxylzahl 40,6).

Beispiel D: Pentaerythrit-adipat-stearat-behenat (7:6:7:7)

Analog Beispiel C wurden 73,3 g (0,539 Mol) Pentaerythrit, 145,5 g (0,539 Mol) technische Stearinsäure, 183,2 g (0,539 Mol) technische Behensäure und 67,4 g (0,46 Mol) Adipinsäure unter Verwendung von zweimal 0,25 g Zinnschliff als Katalysator miteinander umgesetzt. Das erhaltene Pentaerythrit-stearat-behenat (7:6:7:7) (Substanz D; 410 g) stellte eine schwach gelbliche, etwas spröde, wachsartige Masse dar (Tropfpunkt 60,8 °C; Säurezahl 1,3; Verseifungszahl 257,5; Hydroxylzahl 19,2).

Beispiel E: Pentaerythrit-adipat-stearat-behenat (7:6:7:6)

Analog Beispiel C wurden 95,2 g (0,7 Mol) Pentaerythrit, 189,0 g (0,7 Mol) technische Stearinsäure, 204,0 g (0,6 Mol) technische Behensäure und 87,6 g (0,6 Mol) Adipinsäure unter Verwendung von zweimal 0,3 g Zinnschliff als Katalysator miteinander umgesetzt. Das erhaltene Pentaerythrit-adipat-stearat-behenat (7:6:7:6) (Substanz E; 476 g) stellte eine gelbstichige, spröde, wachsartige Masse dar (Tropfpunkt 59,8 °C; Säurezahl 0,66; Verseifungszahl 260,2; Hydroxylzahl 30,0).

Beispiel F: Pentaerythrit-adipat-stearat-behenat (7:6:6:6)

Analog Beispiel C wurden 95,2 g (o,7 Mol) Pentaerythrit, 162,0 g (0,6 Mol) technische Stearinsäure, 204,0 g (0,6 Mol) technische Behensäure und 87,6 g (0,6 Mol) Adipinsäure unter Verwendung von zweimal 0,25 g Zinnschliff als Katalysator miteinander umgesetzt. Das Pentaerythrit-adipat-stearat-behenat (7:6:6:6) (Substanz F; 447 g) wurde als gelbstichige, spröde, wachsartige Masse erhalten (Tropfpunkt 59,4 °C; Säurezahl 0,30; Verseifungszahl 263,9; Hydroxylzahl 41,1).

Beispiel G: Pentaerythrit-adipat-stearat-behenat (7:6:6,5:6,5)

Analog Beispiel C wurden 92,5 g (0,7 Mol) Pentaerythrit, 175,5 g (0,65 Mol) technische Stearinsäure, 221,0 g (0,65 Mol) technische Behensäure und 87,6 g (0,6 Mol) Adipinsäure unter Einsatz von zweimal 0,3 g Zinnschliff als Katalysator miteinander umgesetzt. Das Pentaerythrit-adipat-stearat-behenat (7:6:6,5:6,5) (Substanz G; 477 g) wurde als schwach gelbliche, spröde, wachsartige Masse erhalten (Tropfpunkt 59,1 °C; Säurezahl 0,78; Verseifungszahl 262,0 ; Hydroxylzahl 32,3).

Beispiel H: Glycerin-adipat-stearat (8:7:9)

88 g (0,96 Mol) Glycerin, 121 g (0,83 Mol) Adipinsäure, 290 g (1,07 Mol) technische Stearinsäure, 0,5 g Zinnschliff und 0,5 g $H_3PO_3$ wurden 4 1/2 Stunden lang auf 200 bis 210 °C erhitzt. Dabei wurde zunächst unter Normaldruck gearbeitet. Nach 30 Minuten wurde leichtes Vakuum angelegt und anschließend der Druck im Verlauf von 2 Stunden auf 13 mbar vermindert und weitere 2 Stunden auf diesem Wert gehalten. Die gelbliche, blanke Reaktionsmischung wurde unter Zusatz von Bleicherde bei 90 °C der Druckfiltration unterworfen. Nach dem Abkühlen lag das Glycerin-adipat-stearat (8:7:9) (Substanz H; 403 g) als weißliche, wachsartige Masse vor (Tropfpunkt 40,8 °C; Säurezahl 7,1; Verseifungszahl 340,1; Hydroxylzahl 25,1).

Beispiel I: Pentaerythrit-adipat-stearat (8:7:17)

Analog Beispiel A wurden 76,2 g (0,56 Mol) Pentaerythrit und 321,3 g (1,19 Mol) technische Stearinsäure in Gegenwart von 0,25 g Zinnschliff 2 Stunden lang bei 200 bis 210°C miteinander umgesetzt. Nach Zugabe von 71,5 g (0,49 Mol) Adipinsäure und 0,25 g Zinnschliff wurde das Reaktionsgemisch 16 Stunden lang unter einem Druck von 15- bis 16 mbar auf 200 bis 210 °C erhitzt. Nach Bleicherdezusatz, Druckfiltration bei 90 °C und Abkühlen lag das Pentaerythrit-adipat-stearat (8:7:17) (Substanz I; 367 g), als gelbstichige, spröde, wachsartige Masse vor (Tropfpunkt 55,0°C; Säurezahl 6,9; Verseifungszahl 281,1; Hydroxylzahl 15,9).

Beispiel J: Glycerin-adipat-stearat-hydroxystearat (8:7:9:1)

74,5 g (0,8 Mol) Glycerin und 243,0 g (0,9 Mol) technische Stearinsäure wurden in Gegegenwart von 0,3 g Zinnschliff bei 195 bis 200 °C im Verlauf von 2 Stunden miteinander umgesetzt. Dabei wurde der Druck im Verlauf der ersten Stunde langsam und kontinuierlich auf etwa 70 mbar vermindert und dann bei diesem Wert belassen. Nach Zugabe von 102,2 g (0,7 Mol) Adipinsäure und 0,3 g Zinnschliff wurde das Reaktionsgemisch 3 Stunden lang unter abnehmendem Druck (Endwert 17 mbar) auf 195 bis 200 °C gehalten. Danach wurden 31,2 g (0,1 Mol) technische Hydroxystearinsäure und weitere 0,3 g Zinnschliff zugegeben, bevor das Reaktionsgemisch 3 Stunden lang auf 195 bis 200 °C weitererhitzt wurde. Dabei wurde der Druck im Verlauf der ersten 30 Minuten auf 13 bis 16 mbar reduziert und dann in diesem Bereich gehalten. Nach Bleicherdezusatz, Druckfiltration bei 90 bis 100 °C und Abkühlen lag das Glycerin-adipat-stearat-hydroxystearat (8:7:9:1) (Substanz J; 384 g) als braunstichiggelbe, wachsartige Masse vor (Tropfpunkt 48,0 °C; Säurezahl 7,9; Verseifungszahl 327,3; Hydroxylzahl 20,1).

Beispiel K: Pentaerythrit-adipat-stearat-hydroxystearat (8:7:17:1)

Analog Beispiel J wurden 70,7 g (0,52 Mol) Pentaerythrit, 298,4 g (1,105 Mol) technische Stearinsäure, 66,4 g (0,455 Mol) Adipinsäure und 20,3 g (0,065 Mol) technische Hydroxystearinsäure unter Verwendung von insgesamt 0,5 g Zinnschliff als Katalysator miteinander umgesetzt. Nach Druckfiltration bei 90 °C unter Bleicherdezusatz und Abkühlen lag das Pentaerythrit-adipat-stearat-hydroxystearat (8:7:17:1) (Substanz K; 355 g) als schwach gelbliche, spröde, wachsartige Masse vor (Tropfpunkt 54,7 °C; Säurezahl 5,8; Verseifungszahl 276,6; Hydroxylzahl 12,2).

Beispiel L: Pentaerythrit-adipat-stearat-hydroxystearat (8:7:16:1)

Analog Beispiel J wurden 76,2 g (0,56 Mol) Pentaerythrit, 302,4 g (1,12 Mol) technische Stearinsäure, 71,5 g (0,49 Mol) Adipinsäure und 21,8 g (0,07 Mol) technische Hydroxystearinsäure unter Verwendung von insgesamt 1,0 g Zinnschliff als Katalysator umgesetzt. Nach Druckfiltration bei 90 °C unter Bleicherdezusatz und Abkühlen lag das Pentaerythrit-adipat-stearat-hydroxystearat (8:7:16:1) (Substanz L; 363 g) als gelbliche, spröde, wachsartige Masse vor (Tropfpunkt 54,2 °C; Säurezahl 2,3; Verseifungszahl 281,5; Hydroxylzahl 22,0).

Beispiel M: Pentaerythrit-adipat-stearat-hydroxystearat (7:6:12:3)

95,2 g (0,7 Mol) Pentaerythrit und 324,0 g (1,2 Mol) technische Stearinsäure wurden in Gegenwart von 0,3 g Zinnschliff bei 205 bis 210 °C im Verlauf von 2 Stunden miteinander zur Reaktion gebracht. Dabei wurde der Druck kontinuierlich auf 10 bis 20 mbar vermindert und schließlich in diesem Bereich gehalten. Nach Zugabe von 87,6 g (0,6 Mol) Adipinsäure und 0,15 g Zinnschliff wurde die Reaktionsmischung 2 Stunden lang unter abnehmendem Druck (Endvakuum 10 bis 20 mbar) auf 205 bis 210 °C erhitzt. Danach wurden 93,6 g (0,3 Mol) technische Hydroxystearinsäure und weitere 0,15 g Zinnschliff zugegeben, bevor das Reaktionsgemisch 2 Stunden lang auf 205 bis 210 °C weiter erhitzt wurde. Der Druck wurde dabei kontinuierlich bis zu einem Endvakuum von 10 bis 15 mbar vermindert. Nach Bleicherdezusatz, Druckfiltration bei 90 °C und Abkühlen lag das Pentaerythrit-adipat-stearat-hydroxystearat (7:6:12:3) (Substanz M; 482 g) als gelbliche, schwach spröde, wachsartige, etwas backende Masse vor (Tropfpunkt 51,5°C; Säurezahl 1,06; Verseifungszahl 277,5; Hydroxylzahl 43,2).

Beispiel N: Pentaerythrit-adipat-tartrat-stearat (7:5:1:16)

66,6 g (0,49 Mol) Pentaerythrit und 302,4 g (1,12 Mol) technische Stearinsäure wurden in Gegenwart von 0,2 g Zinnschliff bei 195 bis 205 °C im Verlauf von 1 1/2 Stunden miteinander umgesetzt. Der Druck wurde dabei kontinuierlich auf 12 mbar vermindert und für den Rest der Reaktionszeit auf diesem Wert gehalten. Anschließend wurden 51,1 g (0,35 Mol) Adipinsäure und weitere 0,2 g Zinnschliff zugegeben, bevor das Gemisch unter einem Druck von 16 mbar 2 1/2 Stunden lang auf 195 bis 205°C erhitzt wurde. Die Reaktionsmischung wurde auf 150 °C gekühlt. Nach Zugabe von 10,5 g (0,07 Mol) Weinsäure wurde das Gemisch im Verlauf von 2 1/2 Stunden kontinuierlich von 150°C auf 185 °C erhitzt, wobei der Druck allmählich auf ein Endvakuum von 13 mbar vermindert wurde. Nach Druckfiltration bei 90 bis 100 °C unter Zusatz von Bleicherde und Abkühlen lag das Pentaerythrit-adipat-tartrat-stearat (7:5:1:16) (Substanz N; 328 g) als gelbliche, spröde, wachsartige Masse vor (Tropfpunkt 56,4 °C; Säurezahl 3,0; Verseifungszahl 271,3; Hydroxylzahl 18,7).

Beispiel O: Pentaerythrit-adipat-hydroxysuccinat-stearat (7:4:2:16)

Analog Beispiel N wurden 66,6 g (0,49 Mol) Pentaerythrit, 302,4 g (1,12 Mol) technische Stearinsäure, 40,9 g (0,28 Mol) Adipinsäure und 18,8 g (0,14 Mol Hydroxybernsteinsäure (Äpfelsäure) unter Verwendung von 0,4 g Zinnschliff in einer Dreistufenreaktion miteinander umgesetzt. Nach Bleicherdezusatz, Druckfiltration bei 80 bis 90 °C und Abkühlen lag das Pentaerythrit-adipat-hydroxysuccinat-stearat (7:4:2:16) (Substanz O; 332 g) als gelbliche, spröde, wachsartige Masse vor (Tropfpunkt 56,2 °C; Säurezahl 4,8; Verseifungszahl 256,8; Hydroxylzahl 30,7).

Beispiel P: Pentaerythrit-adipat-stearat-dimethylolpropionat (7:6:15:1)

Analog Beispiel N wurden 66,6 g (0,49 Mol) Pentaerythrit, 283,5 g (1,05 Mol) technische Stearinsäure, 61,3 g (0,42 Mol) Adipinsäure und 9,4 g (0,07 Mol) Dimethylolpropionsäure unter Verwendung von 0,4 g Zinnschliff und 0,2 g $H_3PO_4$ in drei Stufen miteinander umgesetzt. Nach Bleicherdezusatz, Druckfiltration bei 90 °C und Abkühlen lag das Pentaerythrit-adipat-stearat-dimethylolpropionat (7:6:15:1) (Substanz P; 350 g) als gelbliche, spröde, wachsartige Masse vor (Tropfpunkt 54,9; Säurezahl 3,6; Verseifungszahl 285,2; Hydroxylzahl 25,0).

Beispiel Q: Pentaerythrit-adipat-stearat-dimethylolpropionat (8:7:16:1)

Analog Beispiel N wurden 76,2 g (0,56 Mol) Pentaerythrit, 302,4 g (1,12 Mol) technische Stearinsäure, 71,5 g (0,49 Mol) Adipinsäure und 9,4 g (0,07 Mol) Dimethylolpropionsäure unter Verwendung von insgesamt 1,0 g Zinnschliff in drei Stufen miteinander zur Reaktion gebracht. Nach Bleicherdezusatz, Druckfiltration bei 90 °C und Abkühlen lag das Pentaerythrit-adipat-stearat-dimethylolpropionat (8:7:16:1) (Substanz Q;364 g) als gelbliche, spröde wachsartige Masse vor (Tropfpunkt 52,8 °C; Säurezahl 2,7; Verseifungszahl 289,0; Hydroxylzahl 28,0).

Beispiel R: Pentaerythrit-adipat-stearat-dimethylolpropionat (8:7:17:1)

Analog Beispiel N wurden 70,7 g (0,52 Mol) Pentaerythrit, 298,4 g (1,105 Mol) technische Stearinsäure, 66,4 g (0,455 Mol) Adipinsäure und 8,7 g (0,065 Mol) Dimethylolpropionsäure unter Verwendung von insgesamt 1,0 g Zinnschliff in drei Stufen miteinander umgesetzt. Nach Bleicherdezusatz, Druckfiltration bei 90°C und Abkühlen lag das Pentaerythrit-adipat-stearat-dimethylolpropionat (8:7:17:1) (Substanz R; 355 g) als gelbliche, spröde, wachsartige Masse vor (Tropfpunkt 55,0 °C; Säurezahl 2,5; Verseifungszahl 285,7; Hydroxylzahl 23,5).

In den folgenden Beispielen 1 bis 8 wurde Hoechst-Wachs E (Substanz X), ein Ethylenglykolester der Montansäure, als Vergleichssubstanz eingesetzt.

Beispiel 1

Durch mechanisches Vermischen der Einzelbestandteile wurde ein Grundansatz für PVC-Formmassen der folgenden Zusammensetzung hergestellt (GT = Gewichtsteile):

    100 GT      Suspensions-PVC; K-Wert 60 (Vinol® H 60 DS)
    1,5 GT      Dioctylzinnmercaptid (Irgastab ® 17 MOK)

10 GT    High impact modifier auf Basis eines Methacrylat-Butadien-Styrol-Mischpolymerisats (Kane®
         ACE B-28)
1,0 GT   Flow modifier auf Basis von Methacrylsäureester (Paraloid® K 125)
1,0 GT   Glycerindioleat

In diesen Grundansatz wurden auf 100 GT Polymerisat 0,1 GT der vorstehend beschriebenen Substanz A eingearbeitet.

Zur Bestimmung der Dauer der Klebfreiheit wurde die Formmasse auf einem Laborwalzwerk, dessen Walzen eine Ballenbreite von 450 mm und einen Ballendurchmesser von 220 mm hatten (Hersteller: Fa. Berstorff), bei einer Walzentemperatur von 185°C und einer Walzendrehzahl von 12,5 Upm im Gleichlauf unter regelmäßigem Umschlagen des gebildeten Prüffells bearbeitet. Die Formmasse konnte in dieser Weise 65 Minuten lang bearbeitet werden, bevor ein Festkleben an den Walzen zu beobachten war.

Eine weitere Formmasse wurde aus dem oben angegebenen Grundansatz durch Einarbeiten von 0,1 GT Substanz B auf 100 GT Polymerisat hergestellt. Bei der Prüfung auf Klebfreiheit konnte diese Formmasse unter den oben angegebenen Bedingungen 55 Minuten lang bearbeitet werden, bevor das Prüffell an den Walzen festklebte.

Zu Vergleichszwecken wurde die Substanz X in einer Menge von 0,1 GT auf 100 GT Polymerisat in den Grundanzatz eingearbeitet und im übrigen wie oben angegeben verfahren. In diesem Fall klebte das Prüffell bereits nach 25 Minuten Bearbeitung an der Walze fest.

Beispiel 2

Durch mechanisches Vermischen der Einzelbestandteile wurde ein Grundansatz für PVC-Formmassen der folgenden Zusammensetzung hergestellt:
100 GT   Suspensions-PVC, K-Wert 60 (Vinnol® H 60 DS)
1,5 GT   Dioctylzinnmercaptid (Irgastab ® 17 MOK)
1,0 GT   Glycerindioleat

In Teilmengen dieses Grundansatzes wurden die Substanzen A, B, und X in Mengen von 0,1 GT auf 100 GT Polymerisat eingearbeitet. Die Klebfreiheit der erhaltenen PVC-Formmassen betrug unter den in Beispiel 1 angegebenen Bedingungen 55 Minuten bei Einsatz der Substanzen A und B und 25 Minuten bei Einsatz der Substanz X.

Beispiel 3

In Teilmengen des Grundansatzes für PVC-Formmassen gemäß Beispiel 1 wurden die Substanzen A, B, N, O und P in Mengen von 0,3 GT, 0,4 GT und 0,5 GT auf 100 GT Polymerisat eingearbeitet.

Zur Bestimmung der Klebfreiheit wurden die erhaltenen Formmassen bei 200°C wie in Beispiel 1 beschrieben auf dem Laborwalzwerk behandelt. Die dabei gefundenen Ergebnisse sind in der nachstehenden Tabelle I wiedergegeben.

Zur Prüfung der Transparenz wurden aus den erhaltenen PVC-Formmassen 4 mm starke Preßplatten hergestellt und deren Transparenz in Prozent gegenüber Luft als Bezugsstandard ermittelt. Für die Messungen wurde ein Transparenzmeßgerät der Fa. Dr. Bruno Lange GmbH, Neuß, verwendet, wobei nach dem Absorptionsverfahren gearbeitet wurde. Die Ergebnisse der Transparenzmessungen sind ebenfalls in der Tabelle I wiedergegeben.

8

T A B E L L E  I

| Substanz | Klebfreiheit (min) | | | Transparenz (%) | | |
|---|---|---|---|---|---|---|
| | 0,3 | 0,4 | 0,5 | 0,3 | 0,4 | 0,5 |
| A | 18 | 22 | 26 | 59 | 52 | 48 |
| B | 22 | 20 | 22 | 56 | 47 | 50 |
| N | 20 | – | 24 | 57 | – | 49 |
| O | 22 | – | 24 | 55 | – | 50 |
| P | 26 | – | 30 | 56 | – | 51 |
| X | 18 | 18 | 18 | 59 | 58 | 57 |

Beispiel 4

In Teilmengen des Grundansatzes gemäß Beispiel 2 wurden die Substanzen A, B, N, O, P und X in Mengen von 0,3 GT, 0,4 GT und 0,5 GT auf 100 GT Polymerisat eingearbeitet.

Zur Bestimmung der Klebfreiheit wurden die erhaltenen Formmassen bei 200°C wie in Beispiel 1 beschrieben auf dem Laborwalzwerk behandelt. Die dabei gefundenen Ergebnisse sind in der nachstehenden Tabelle II wiedergebeben.

Weiterhin wurden die erhaltenen Formmassen zu 4 mm dicken Platten verpreßt und die Transparenz der Platten, wie in Beispiel 3 beschrieben, ermittelt. Die Ergebnisse der Transparenzmessungen sind ebenfalls in der Tabelle II verzeichnet.

T A B E L L E  II

| Substanz | Klebfreiheit (min) | | | Transparenz (%) | | |
|---|---|---|---|---|---|---|
| | 0,3 | 0,4 | 0,5 | 0,3 | 0,4 | 0,5 |
| A | 22 | 26 | 28 | 78 | 73 | 69 |
| B | 22 | 28 | 26 | 81 | 77 | 71 |
| N | 22 | – | 28 | 76 | – | 58 |
| O | 22 | – | 28 | 77 | – | 60 |
| P | 20 | – | 28 | 80 | – | 70 |
| X | 14 | 22 | 24 | 40 | 34 | 46 |

Beispiel 5

In Teilmengen des Grundansatzes gemäß Beispiel 1 wurden die Substanzen C, D, E, F, G, M und X in Mengen von 0,3 GT, 0,4 GT und 0,5 GT auf 100 GT Polymerisat eingearbeitet.

Die Klebfreiheit und die Transparenz der erhaltenen PVC-Formmassen wurden unter den in Beispiel 3 beschriebenen Bedingungen ermittelt. Die dabei erhaltenen Ergebnisse sind in der nachstehenden Tabelle III wiedergegeben.

## T A B E L L E  III

| Substanz | Klebfreiheit (min) | | | Transparenz (%) | | |
|---|---|---|---|---|---|---|
| | 0,3 | 0,4 | 0,5 | 0,3 | 0,4 | 0,5 |
| C | 6 | 10 | 10 | 62 | 59 | 56 |
| D | 14 | 14 | 20 | 60 | 58 | 55 |
| E | 16 | 18 | 20 | 60 | 57 | 55 |
| F | 12 | 14 | 16 | 61 | 58 | 57 |
| G | 10 | 14 | 24 | 61 | 59 | 57 |
| M | 18 | 20 | 26 | 60 | – | 56 |
| X | 4 | 4 | 6 | 62 | 60 | 58 |

Beispiel 6

Die Substanzen C, D, E, F, G, M und X wurden in Mengen von 0,3 GT, 0,4 GT und 0,5 GT auf 100 GT Polymerisat in Teilmengen des Grundansatzes gemäß Beispiel 2 eingearbeitet.

Die Klebfreiheit und Transparenz der auf diese Weise hergestellten PVC-Formmassen wurden unter den in Beispiel 3 beschriebenen Bedingungen bestimmt. Die gefundenen Ergebnisse sind in der nachstehenden Tabelle IV wiedergegeben.

**EP 0 259 783 B1**

## T A B E L L E  IV

| Substanz | Klebfreiheit (min) | | | Transparenz (%) | | |
|---|---|---|---|---|---|---|
| | 0,3 | 0,4 | 0,5 | 0,3 | 0,4 | 0,5 |
| C | 24 | 26 | 28 | 77 | 66 | 57 |
| D | 24 | 26 | 26 | 81 | 76 | 68 |
| E | 22 | 24 | 26 | 82 | 78 | 73 |
| F | 22 | 22 | 24 | 82 | 79 | 75 |
| G | 22 | 24 | 28 | 82 | 78 | 73 |
| M | 20 | 24 | 28 | 82 | 79 | 75 |
| X | 12 | 20 | 26 | 54 | 25 | 6 |

Beispiel 7

In Teilmengen des Grundansatzes gemäß Beispiel 1 wurden die Substanzen H, I, J, K, L, P, Q, R und X in Mengen von 0,2 GT und 0,5 GT auf 100 GT Polymerisat eingearbeitet.

Die Klebfreiheit der auf diese Weise hergestellten PVC-Formmassen wurde unter den in Beispiel 3 beschriebenen Bedingungen bestimmt. Außerdem wurde die Transparenz der Formmassen, die jeweils auf 100 GT Polymerisat 0,5 GT der genannten Substanzen enthielten, in der angegebenen Weise ermittelt. Die gefundenen Resultate sind in der nachstehenden Tabelle V zusammengefaßt.

## T A B E L L E  V

| Substanz | Klebfreiheit (min) 0,2 | 0,5 | Transparenz (%) 0,5 |
|---|---|---|---|
| H | 14 | 24 | 50 |
| I | 20 | 32 | 42 |
| J | 14 | 28 | 49 |
| K | 22 | 28 | 43 |
| L | 28 | 28 | 43 |
| P | 18 | 30 | 43 |
| Q | 22 | 28 | 44 |
| R | 12 | 30 | 43 |
| X | 10 | 20 | 52 |

Beispiel 8

Die Substanzen H, I, J, K, L, P, Q, R und X wurden in Mengen von 0,2 GT und 0,5 auf 100 GT Polymerisat in Teilmengen des Grundansatzes für PVC-Formmassen gemäß Beispiel 2 eingearbeitet.

Die Klebfreiheit der erhaltenen Formmassen wurde unter den in Beispiel 3 beschriebenen Bedingungen bestimmt. Außerdem wurde die Transparenz der Formmassen, die jeweils auf 100 GT Polymerisat 0,5 GT der genannten Substanzen enthielten, in der angegebenen Weise ermmittelt. Die Ergebnisse der Prüfungen sind in der nachstehenden Tabelle VI wiedergegeben.

T A B E L L E  VI

| Substanz | Klebfreiheit (min) 0,2 | 0,5 | Transparenz (%) 0,5 |
|---|---|---|---|
| H | 10 | 20 | 77 |
| I | 26 | 32 | 69 |
| J | 24 | 32 | 76 |
| K | 32 | 30 | 68 |
| L | 26 | 30 | 72 |
| P | 28 | 30 | 68 |
| Q | 28 | 30 | 73 |
| R | 26 | 30 | 69 |
| X | 12 | 26 | 11 |

**Patentansprüche**

1. Für die Verwendung als Gleitmittel für thermoplastische Kunststoffe geeignete Mischester aus
   a) aliphatischen, cycloaliphatischen und/oder aromatischen Dicarbonsäuren mit 2 bis 22 Kohlenstoffatomen, die gegebenenfalls mit 1 bis 2 Hydroxylgruppen substituiert sind,
   b) aliphatischen Polyolen mit 3 bis 6 Hydroxylgruppen und
   c) aliphatischen Monocarbonsäuren mit 2 bis 32 Kohlenstoffatomen, die gegebenenfalls mit 1 bis 2 Hydroxylgruppen substituiert sind,
   in denen das Molverhältnis der Komponenten a) und b) etwa

   n - 1 : n

   beträgt, wobei n eine ganze Zahl von 6 bis 15 ist, und die Art und die Molzahl der Komponente c) so gewählt ist, daß pro Molekül Mischester mindestens eine freie Hydroxylgruppe vorhanden ist.

2. Mischester nach Anspruch 1 dadurch gekennzeichnet, daß in den Mischestern das Molverhältnis von freien Hydroxylgruppen zu vorhandenen Dicarbonsäureresten im Bereich von 1 : 1 bis 1 : 7 liegt.

3. Verwendung von Mischestern aus
   a) aliphatischen, cycloaliphatischen und/oder aromatischen Dicarbonsäuren mit 2 bis 22 Kohlenstoffatomen, die gegebenenfalls mit 1 bis 2 Hydroxylgruppen substituiert sind,
   b) aliphatischen Polyolen mit 3 bis 6 Hydroxylgruppen und
   c) aliphatischen Monocarbonsäuren mit 2 bis 32 Kohlenstoffatomen, die gegbenenfalls mit 1 bis 2 Hydroxylgruppen substituiert sind,
   in denen das Molverhältnis der Komponente a) und b) etwa

   n - 1 : n

   beträgt, wobei n eine ganze Zahl von 6 bis 15 ist und die Art und die Molzahl der Komponente c) so gewählt ist, daß pro Molekül Mischester im Mittel mindestens eine freie Hydroxylgruppe vorhanden ist, als Gleitmittel für die formgebende Verarbeitung von thermoplastischen Kunststoffen, insbesondere von Polyvinylchlorid oder überwiegend Vinylchlorid enthaltenden Mischpolymerisaten.

4. Verwendung nach Anspruch 3 dadurch gekennzeichnet, daß in den Mischestern das Molverhältnis von freien Hydroxylgruppen zu vorhandenen Dicarbonsäureresten im Bereich von 1 : 1 bis 1 : 7 liegt.

5. Formmassen auf Basis von thermoplastischen Kunststoffen, insbesondere von Polyvinylchlorid oder überwiegend Vinylchlorid enthaltenden Mischpolymerisaten mit einem Gehalt an Mischestern aus
   a) aliphatischen, cycloaliphatischen und/oder aromatischen Dicarbonsäuren mit 2 bis 22 Kohlenstoffatomen, die gegebenenfalls mit 1 bis 2 Hydroxylgruppen substituiert sind,
   b) aliphatischen Polyolen mit 3 bis 6 Hydroxylgruppen und
   c) aliphatischen Monocarbonsäuren mit 2 bis 32 Kohlenstoffatomen, die gegebenenfalls mit 1 bis 2 Hydroxylgruppen substituiert sind,
   in denen das Verhältnis der Komponenten a) und b) etwa

   n - 1 : n

   beträgt, wobei n eine ganze Zahl von 6 bis 15 ist und die Art und die Molzahl der Komponente c) so gewählt ist, daß pro Molekül Mischester im Mittel mindestens eine freie Hydroxylgruppe vorhanden ist, als Gleitmittel, wobei die Mischester in Mengen von 0,2 bis 2 Gewichtsteilen auf 100 Gewichtsteile Polymerisat vorhanden sind.

6. Formmassen nach Anspruch 5 dadurch gekennzeichnet, daß in den Mischestern das Molverhältnis von freien Hydroxylgruppen zu vorhandenen Carbonsäureresten im Bereich von 1 : 1 bis 1 : 7 liegt.

**Claims**

1. Mixed esters, suitable for use as lubricants for thermoplasics, of
   a) aliphatic, cycloaliphatic and/or aromatic $C_{2-22}$ dicarboxylic acids optionally substituted by 1 to 2 hydroxyl groups,
   b) aliphatic polyols containing from 3 to 6 hydroxyl groups and
   c) aliphatic $c_{2-32}$ monocarboxylic acids optionally substituted by 1 to 2 hydroxyl groups,
   in which the molar ratio of components a) and b) is approximately n - 1 : n, where n is an integer of from 6 to 15, and the nature and number of mols of component c) are selected so that, on average, at least one free hydroxyl group is present per molecule mixed ester.

2. Mixed esters as claimed in claim 1, characterized in that the molar ratio of free hydroxyl groups to dicarboxylic acid residues in the mixed esters is from 1:1 to 1:7.

3. The use of mixed esters of
   a) aliphatic, cycloaliphatic and/or aromatic $C_{2-22}$ dicarboxylic acids optionally substituted by 1 to 2 hydroxyl groups,
   b) aliphatic polyols containing from 3 to 6 hydroxyl groups and
   c) aliphatic $C_{2-32}$ monocarboxylic acids optionally substituted by 1 to 2 hydroxyl groups,
   in which the molar ratio of components a) and b) is approximately n - 1 : n, where n is an integer of from 6 to 15, and the nature and number of mols of component c) are selected so that, on average, at least one free hydroxyl group is present per molecule mixed ester, as lubricants for the moulding of thermoplastic plastics, particularly polyvinyl chloride or copolymers predominantly containing vinyl chloride.

4. The use claimed in claim 3, characterized in that the molar ratio of free hydroxyl groups to dicarboxylic acid residues present in the mixed esters is from 1:1 to 1:7.

5. Moulding compositions based on thermoplastic plastics, more especially polyvinyl chloride or copolymers predominantly containing vinyl chloride, characterized by the presence of mixed esters of
   a) aliphatic, cycloaliphatic and/or aromatic $C_{2-22}$ dicarboxylic acids optionally substituted by 1 to 2 hydroxyl groups,
   b) aliphatic polyols containing from 3 to 6 hydroxyl groups and

c) aliphatic $C_{2-32}$ monocarboxylic acids optionally substituted by 1 to 2 hydroxyl groups,
in which the molar ratio of components a) and b) is approximately n - 1 : n, where n is an integer of from 6 to 15, and the nature and number of mols of component c) are selected so that, on average, at least one free hydroxyl group is present per molecule mixed ester, as lubricants in quantities of from 0.2 to 2 parts by weight to 100 parts by weight polymer.

6. Moulding compositions as claimed in claim 5, characterized in that the molar ratio of free hydroxyl groups to carboxylic acid residues in the mixed esters is from 1:1 to 1:7.

**Revendications**

1. Esters mixtes appropriés à l'utilisation comme agents de démoulage ou de lubrification pour les thermoplastiques, constitués
   a) d'acides dicarboxyliques aliphatiques, cycloaliphatiques et/ou aromatiques, comportant 2 à 22 atomes de carbone, qui sont substitués le cas échéant par 1 à 2 groupes hydroxyle,
   b) de polyols aliphatiques comportant 3 à 6 groupes hydroxyle et
   c) d'acides monocarboxyliques aliphatiques comportant 2 à 32 atomes de carbone, qui sont substitués le cas échéant par 1 à 2 groupes hydroxyle,
   dans lesquels le rapport molaire des composants a) et b) atteint environ

   n - 1 : n

   n étant un nombre entier de 6 à 15, et la nature et le nombre de moles du composant c) étant choisis de manière qu'au moins un groupe hydroxyle libre soit présent par molécule d'ester mixte.

2. Ester mixte selon la revendication 1, caractérisé en ce que dans les esters mixtes, le rapport molaire entre les groupes hydroxyle libres et les esters d'acides dicarboxyliques présents est compris dans l'intervalle de 1:1 à 1:7.

3. Utilisation d'esters mixtes
   a) d'acides dicarboxyliques aliphatiques, cycloaliphatiques et/ou aromatiques, comportant 2 à 22 atomes de carbone, qui sont substitués le cas échéant par 1 à 2 groupes hydroxyle,
   b) de polyols aliphatiques comportant 3 à 6 groupes hydroxyle et
   c) d'acides monocarboxyliques aliphatiques comportant 2 à 32 atomes de carbone, qui sont substitués le cas échéant par 1 à 2 groupes hydroxyle,
   dans lesquels le rapport molaire des composants a) et b) atteint environ

   n - 1 : n

   n étant un nombre entier de 6 à 15, et la nature et le nombre de moles du composant c) étant choisis de manière qu'au moins un groupe hydroxyle libre soit présent par molécule d'ester mixte dans l'agent, comme agents de démoulage ou de lubrification pour le façonnement des thermoplastiques, en particulier du chlorure de polyvinyle ou de polymères mixtes ou copolymères renfermant essentiellement du chlorure de vinyle.

4. Utilisation selon la revendication 3, caractérisée en ce que dans les esters mixtes, le rapport molaire entre les groupes hydroxyle libres et les radicaux d'acides dicarboxyliques présents est compris dans l'intervalle de 1:1 à 1:7.

5. Matières moulables à base de thermoplastiques, en particulier de chlorure de polyvinyle ou de polymères mixtes ou copolymères renfermant essentiellement du chlorure de vinyle, avec un contenu en esters mixtes
   a) d'acides dicarboxyliques aliphatiques, cycloaliphatiques et/ou aromatiques, comportant 2 à 22 atomes de carbone, qui sont substitués le cas échéant par 1 à 2 groupes hydroxyle,
   b) de polyols aliphatiques comportant 3 à 6 groupes hydroxyle et
   c) d'acides monocarboxyliques aliphatiques comportant 2 à 32 atomes de carbone, qui sont substitués le cas échéant par 1 à 2 groupes hydroxyle,
   dans lesquels le rapport molaire des composants a) et b) atteint environ

n - 1 : n

n étant un nombre entier de 6 à 15, et la nature et le nombre de modes du composant c) étant choisis de manière qu'au moins un groupe hydroxyle libre soit présent par molécule d'ester mixte dans l'agent, comme agents de démoulage ou de lubrification, les esters mixtes étant présents en quantités allant de 0,2 à 2 parties en poids pour 100 parties en poids de polymère.

6. Matières moulables selon la revendication 5, caractérisée en ce que dans les esters mixtes, le rapport molaire entre les groupes hydroxyle libres et les radicaux d'acides carboxyliques présents est compris dans l'intervalle de 1:1 à 1:7.

16